(19)

Europäisches
Patentamt
European
Patent Office
Office européen
des brevets

(11)     **EP 2 772 627 B1**

(12)                        **EUROPEAN PATENT SPECIFICATION**

(45) Date of publication and mention
of the grant of the patent:
**21.03.2018 Bulletin 2018/12**

(21) Application number: **11874462.2**

(22) Date of filing: **26.10.2011**

(51) Int Cl.:
**F02D 19/02** *(2006.01)*      **F02D 45/00** *(2006.01)*
**F02D 41/00** *(2006.01)*

(86) International application number:
**PCT/JP2011/074708**

(87) International publication number:
**WO 2013/061429 (02.05.2013 Gazette 2013/18)**

(54) **FUEL PROPERTY DETERMINATION SYSTEM FOR VEHICLE**

KRAFTSTOFFEIGENSCHAFTBESTIMMUNGSSYSTEM FÜR EIN FAHRZEUG

SYSTÈME DE DÉTECTION DE PROPRIÉTÉ D'UN CARBURANT POUR UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.09.2014 Bulletin 2014/36**

(73) Proprietor: **Toyota Jidosha Kabushiki Kaisha
Toyota-shi, Aichi 471-8571 (JP)**

(72) Inventors:
• **MASUBUCHI, Masahiko
Toyota-shi
Aichi 471-8571 (JP)**
• **TANIGUCHI, Satoshi
Toyota-shi
Aichi 471-8571 (JP)**

• **KITANO, Koji
Toyota-shi
Aichi 471-8571 (JP)**
• **ETO, Hiroshi
Obu-shi
Aichi 474-8588 (JP)**

(74) Representative: **Intès, Didier Gérard André et al
Cabinet Beau de Loménie
158 rue de l'Université
75340 Paris Cedex 07 (FR)**

(56) References cited:
**WO-A1-2008/049890      DE-B3-102006 022 357
JP-A- H 085 596      JP-A- H1 054 305
JP-A- H10 148 143      JP-A- 2003 003 909
JP-A- 2004 076 585      JP-A- 2010 018 128
JP-A- 2010 208 700**

EP 2 772 627 B1

## Description

### TECHNICAL FIELD

The present invention relates to a technology for determining properties of gaseous fuel in a vehicle with an internal combustion engine that uses compressed natural gas as gaseous fuel.

### BACKGROUND ART

There has been developed heretofore a prior art in which a sensor for determining the composition of hydrocarbon (HC) is provided in a fuel line in an internal combustion engine using CNG as fuel, and a target air-fuel ratio is adjusted based on a value determined by the sensor. There has also been developed a prior art in which an internal pressure sensor for sensing the pressure in a fuel tank for an internal combustion engine using CNG as fuel is provided in the fuel tank, and a target air-fuel ratio is adjusted based on the pressure determined by the sensor (see, for example, Patent Document 1). WO 2008/049890 A1 discloses a method for determining the composition of a gas mixture in a tank. The method comprises the steps of: determining a first pressure in the tank at the start of a predetermined time interval; removing gas mixture from the tank; determining the mass of the gas mixture removed from the tank during the predetermined time interval; determining a second pressure in the tank at the end of the predetermined time interval; and determining the composition of the gas mixture in the tank from the first pressure, the second pressure and the mass of the gas mixture removed from the tank during the time interval.

### PRIOR ART DOCUMENTS

#### Patent Documents

Patent Document 1: Japanese Patent Application Laid-Open No. 10-148143

### DISCLOSURE OF THE INVENTION

#### Problem To Be Solved By The Invention

The above-described prior arts have their basis on the fact that the vaporization pressure of a plurality of components constituting a CNG are different from each other. In other words, the above-described prior arts were invented based on the assumption that as the pressure in the fuel tank decreases with consumption of the fuel, properties of the CNG supplied to the internal combustion engine from the fuel tank changes.

In the above-described prior arts, when the pressure in the fuel tank changes rapidly, as is the case when with gaseous fuel is supplied into the fuel tank for replenishment, there is a possibility that properties of the gaseous fuel after the supply cannot be determined promptly. Therefore, in the above-described prior arts, there is a possibility that properties of the gaseous fuel after the supply cannot be determined on the occasion that the internal combustion engine is started for the first time after the supply of gaseous fuel.

The present invention has been made in view of the above-described circumstances, and an object of the present invention is to provide a technology with which when compressed natural gas is supplied into a fuel tank of a vehicle with an internal combustion engine, properties of the supplied compressed natural gas can be determined promptly.

#### Means For Solving The Problem

To achieve the above object, the fuel property determination system for a vehicle equipped with an internal combustion engine using compressed natural gas containing $CO_2$ and $N_2$ as gaseous fuel according to the present invention is adapted to calculate, when compressed natural gas is supplied to a fuel tank, the gas constant of the supplied compressed natural gas using a cross sectional area of a passage for delivering compressed natural gas to the fuel tank from a filler port and a change in the pressure in the fuel tank as parameters and to calculate the concentration of $CO_2$ and $N_2$ contained in the compressed natural gas using the gas constant as a parameter.

Specifically, the invention relates to a system according to claim 1.

As new compressed natural gas (which will be hereinafter referred to as the "filling fuel") is supplied to the fuel tank, the compressed natural gas remaining in the fuel tank (which will be hereinafter referred to as the "remaining fuel") and the filling fuel are mixed. In the case where the properties of the filling fuel and the properties of the remaining fuel are different, the properties of the compressed natural gas supplied from the fuel tank to the internal combustion engine after filling with the filling fuel (i.e. the mixed fuel as a mixture of the filling fuel and the remaining fuel) are different from the properties of the fuel supplied to the internal combustion engine before filling with the filling fuel (i.e. the remaining fuel).

What is caused in the internal combustion engine by a change in the properties of the compressed natural gas includes a change in the theoretical air-fuel ratio. In particular, when the concentration of carbon dioxide $CO_2$ and nitrogen $N_2$ contained in the compressed natural gas changes, the theoretical air-fuel ratio of the air-fuel mixture also changes. Therefore, if the concentration of $CO_2$ and $N_2$ contained in the filling fuel can be determined, the theoretical air-fuel ratio of the fuel supplied to the internal combustion engine after filling with the filling fuel (i.e. the mixed fuel) can also be determined.

The concentration of $CO_2$ and $N_2$ contained in the compressed natural gas correlates with the gas constant of the compressed of the natural gas The gas constant of the compressed natural gas correlates with the velocity of the compressed natural gas (acoustic velocity) during filling. The velocity of the compressed natural gas during filling correlates with the ratio of the quantity of compressed natural gas supplied for filling per unit time (i.e. the flow rate of the compressed natural gas) and the cross sectional area of the fuel passage. The quantity of compressed natural gas supplied for filling per unit time correlates with the rise in the pressure in the fuel tank per unit time. Therefore, the gas constant of the compressed natural gas can be calculated using the change in the value measured by the pressure sensor per unit time and the cross sectional area of the fuel passage as parameters.

Therefore, according to the present invention, when compressed natural gas is supplied into the fuel tank (for filling), properties of the supplied compressed natural gas (filling fuel) can be determined promptly.

The fuel property determination system for a vehicle according to the present invention may be adapted to calculate the $CO_2$ and $N_2$ concentration in the mixed fuel from the quantity of the remaining fuel, the $CO_2$ and $N_2$ concentration in the remaining fuel, the quantity of the filling fuel, and the $CO_2$ and $N_2$ concentration in the filling fuel.

With the above-described system configuration, the $CO_2$ and $N_2$ concentration in the mixed fuel as a mixture of the filling fuel and the remaining fuel can be determined. In consequence, on the occasion that the internal combustion engine is caused to run for the first time after filling with the filling fuel, it is possible to form air-fuel mixture having a air-fuel ratio appropriate to the mixed fuel.

The inventors of the present invention have conducted experiments and verifications strenuously to find that the theoretical air-fuel ratio is lower when the $CO_2$ and $N_2$ concentration is high than when it is low. Therefore, the system may be adapted to calculate the theoretical air-fuel ratio of the mixed fuel using the $CO_2$ and $N_2$ concentration in the mixed fuel as a parameter. In this case, the calculation is adapted in such a way that the theoretical air-fuel ratio obtained as the result of calculation is lower when the $CO_2$ and $N_2$ concentration is high than when it is low. If the theoretical air-fuel ratio of the mixed fuel is determined, it is also possible to adjust a target fuel injection quantity and/or a target intake air quantity on the basis of the theoretical air-fuel ratio of the mixed fuel. In other words, it is possible to perform an air-fuel ratio control adapted to the theoretical air-fuel ratio of the mixed fuel. In consequence, when the internal combustion engine is caused to run for the first time after filling with the filling CNG, the air-fuel ratio of the air-fuel mixture can be made equal to an intended target air-fuel ratio.

The fuel property determination system for a vehicle according to the present invention may be adapted to adjust the fuel injection quantity and/or the intake air quantity using the $CO_2$ and $N_2$ concentration in the mixed fuel as a parameter. For example, the fuel property determination system for a vehicle according to the present invention may be adapted to correct a target fuel injection quantity and/or a target intake air quantity on the basis of a relationship between the $CO_2$ and $N_2$ concentration in compressed natural gas and the theoretical air fuel ratio according to which the theoretical air-fuel ratio is lower when the $CO_2$ and $N_2$ concentration is high than when it is low. In other words, the fuel property determination system for a vehicle according to the present invention may correct the target fuel injection quantity in such a way that the fuel injection quantity is made larger when the $CO_2$ and $N_2$ concentration in the mixed fuel is high than when it is low and correct the degree of opening of an intake throttle valve and/or the timing of opening/closing the intake valve in such a way that the intake air quantity is made smaller when the $CO_2$ and $N_2$ concentration in the mixed fuel is high than when it is low. If the target fuel injection quantity or the target intake air quantity is corrected in the above-described manner, it is possible to form air-fuel mixture having an air-fuel ratio appropriate to the properties of the mixed fuel. In consequence, even on the occasion that the internal combustion engine is caused to run for the first time after filling with the filling fuel, the air-fuel ratio of the air-fuel mixture can be made equal to an intended target air-fuel ratio.

**Effects Of The Invention**

When compressed natural gas is supplied into a fuel tank of a vehicle with an internal combustion engine that uses compressed natural gas, the fuel property determination system for a vehicle according to the present invention can determine properties of the supplied compressed natural gas promptly.

**Brief Description Of The Drawings**

Fig. 1 is a diagram showing the general construction of a fuel property determination system for a vehicle.

Fig. 2 is a graph showing a relationship between the concentration of inert gases contained in a CNG and its theoretical air-fuel ratio.

Fig. 3 is a flow chart of a processing routine executed by an ECU to determine the inert gas concentration in a filling CNG.

Fig. 4 is a flow chart of a processing routine executed by the ECU to determine the gas constant of a mixed CNG.

Fig. 5 is a graph showing a relationship between the concentration of inert gases contained in a CNG and a correction term for the fuel injection quantity.

**The Best Mode For Carrying Out The Invention**

In the following, a specific embodiment of the present invention will be described with reference to the drawings. The dimensions, materials, shapes, relative arrangements, and other features of the components that will be described in connection with the embodiment are not intended to limit the technical scope of the present invention only to them, unless particularly stated.

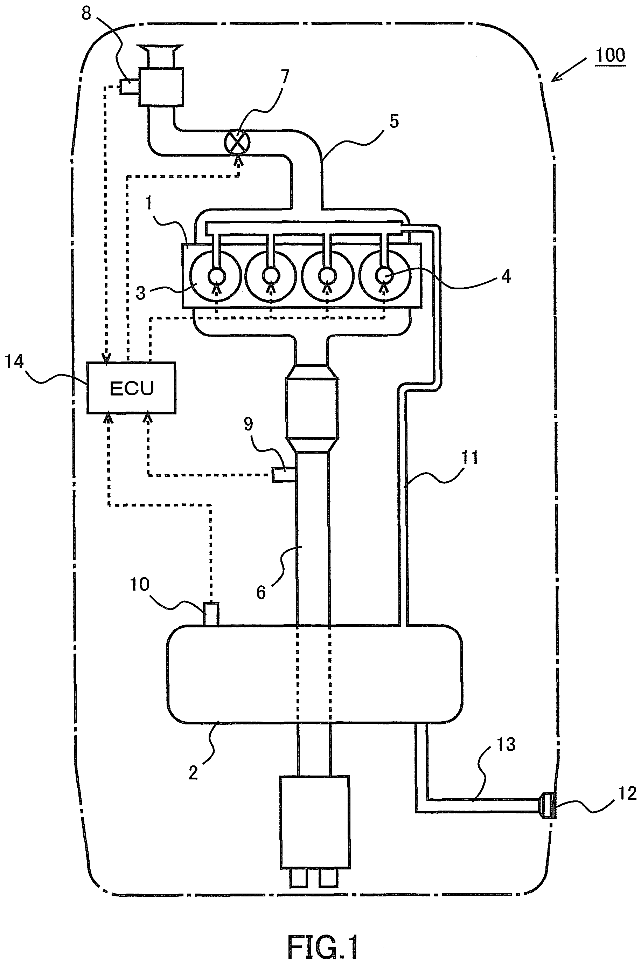

Fig. 1 is a diagram showing the general construction of a fuel property determination system for a vehicle according to the present invention. A vehicle 100 shown in Fig. 1 is equipped with an internal combustion engine 1 and a fuel tank 2. The internal combustion engine 1 has a plurality of cylinders 3 and fuel injection valves 4 that inject fuel into the respective cylinders 3. The internal combustion engine 1 is connected with an intake passage 5 and an exhaust passage 6.

The intake passage 5 is a passage used to deliver fresh air taken from the atmosphere into the cylinders 3 of the internal combustion engine 1. An intake throttle valve 7 for changing the cross sectional area of the intake passage 5 and an intake air temperature sensor 8 for measuring the temperature of the fresh air (outside air temperature) are provided in the middle of the intake passage 5.

The exhaust passage 6 is a passage used to cause burned gas (exhaust gas) discharged from the cylinders 3 to be emitted to the atmosphere after passing through an exhaust gas purification catalyst and a silencer. An A/F sensor 9 that measures the air-fuel ratio of the exhaust gas is attached to the exhaust passage 6.

The fuel tank 2 is a tank in which compressed natural gas (CNG) is stored. The fuel tank 2 is provided with a pressure sensor 10 that measures the pressure in the fuel tank 2. The fuel tank 2 is in communication with the injection valves 4 of the internal combustion engine 1 via a fuel supply pipe 11. The fuel supply pipe 11 is a passage used to introduce the CNG in the fuel tank 2 to the fuel injection valves 4. The fuel tank 2 is connected with a filler port 12 provided on the body of the vehicle 100 through an inlet pipe 13. The filler port 12 is adapted to open responsive to insertion of a fuel service nozzle in a gas station or the like into it to introduce CNG supplied through the fuel service nozzle into the inlet pipe 13.

The vehicle 100 having the above-described construction is equipped with an ECU 14. The ECU 14 is an electronic control unit composed of a CPU, a ROM, a RAM, and a backup ROM etc. The ECU 14 is connected with various sensors such as the intake air temperature sensor 8, the A/F sensor 9, and the pressure sensor 10. The ECU 14 is electrically connected with various components such as the fuel injection valves 4 and the intake throttle valve 7. The ECU 14 controls the above-mentioned various components based on signals input thereto from the above-mentioned various sensors.

For instance, the ECU 14 calculates the fuel injection quantity responsive to the load and speed of the internal combustion engine 1 and controls the fuel injection valves 4 in accordance with the fuel injection quantity thus calculated. Properties of the CNG supplied to the fuel tank 2 are not necessarily uniform but may vary from one CNG supply station (filling station) to another. The air-fuel ratio at which the CNG and oxygen in the air-fuel mixture react without excess or deficiency (i.e. the theoretical air-fuel ratio) varies depending on the properties of the CNG. In particular, different concentrations of the inert gases (carbon dioxide $CO_2$ and nitrogen $N_2$) lead to different theoretical air-fuel ratios.

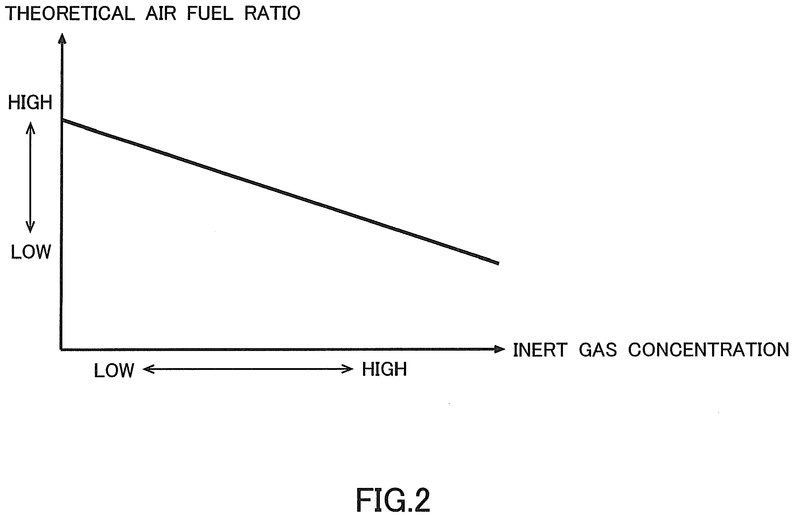

The inventors of the present invention have conducted experiments and verifications strenuously to find that the concentration of the inert gases in the CNG and the theoretical air-fuel ratio are in the relationship shown in Fig. 2. Specifically, as shown in Fig. 2, the theoretical air-fuel ratio is lower when the concentration of the inert gases is high than when it is low. Therefore, in cases where a CNG (which will be hereinafter referred to as the "filling CNG") having properties different from the properties of the CNG remaining in the fuel tank 2 (which will be hereinafter referred to as the "remaining CNG") is supplied to fill the fuel tank 2, if the fuel injection quantity and the intake air quantity after the filling are controlled based on the theoretical air-fuel ratio of the remaining CNG, the actual air-fuel ratio can be different from an intended target air-fuel ratio.

For instance, in the case where a filling CNG with an inert gas concentration higher than that of the remaining CNG is supplied for filling, the theoretical air-fuel ratio of the CNG after filling (that is, the CNG as a mixture of the remaining CNG and the filling CNG, which will be hereinafter referred to as the "mixed CNG") will be lower than the theoretical air-fuel ratio of the remaining CNG. Therefore, if the fuel injection quantity and the intake air quantity after the supply of the filling CNG are controlled based on the theoretical air-fuel ratio of the remaining CNG, the actual air-fuel ratio will become higher (or leaner) than the target air-fuel ratio. This can lead to an increase in exhaust emissions and/or a decrease in the engine power output, consequently.

On the other hand, in the case where a filling CNG with an inert gas concentration lower than that of the remaining CNG is supplied for filling, the theoretical air-fuel ratio of the mixed CNG will be higher than the theoretical air-fuel ratio of the remaining CNG. Therefore, if the fuel injection quantity and the intake air quantity after the supply of the filling CNG are controlled based on the theoretical air-fuel ratio of the remaining CNG, the actual air-fuel ratio will become lower (or richer) than the target air-fuel ratio. This can lead an increase in exhaust emissions, an increase in the engine power output, and/or misfire, consequently.

Since a feedback control for correcting the fuel injection quantity on the basis of the difference between the actual air-fuel ratio and the target air-fuel ratio is performed while the internal combustion engine 1 is running, the above-described difference in the air-fuel ratio might be eliminated. However, it takes some time to eliminate the difference in the air-fuel ratio by performing the aforementioned feedback control. Therefore, on the occasion that the internal combustion engine 1 is caused to run (or started) for the first time after filling with the filling CNG, there is a possibility that the actual air-fuel ratio becomes different from the target air-fuel ratio, leading to deteriorated start performance.

In view of the above, the fuel property determination system for a vehicle according to the embodiment is adapted to determine the concentration of the inert gases contained in the filling CNG at the time when the filling CNG is supplied and to control the fuel injection quantity and the intake air quantity after the filling on the basis of the inert gas concentration thus determined.

In the following, a method of determining the inert gas concentration in the filling CNG will be described. The concentration of the inert gases contained in the CNG correlates with the gas constant of the CNG. Therefore, the inert gas concentration in the CNG can be determined by calculating the gas constant of the CNG.

It is known that the gas constant of the CNG can be expressed by the following equation (1):

$$R = a^2/(\gamma * T) \quad (1),$$

where R is the gas constant, a is the acoustic velocity in the gas, $\gamma$ is the specific heat ratio of the gas, and T is the temperature of the gas.

The above equation (1) holds when the velocity of the filling CNG flowing from the filler port 12 to the fuel tank 2 is equal to or higher than the acoustic velocity. That is to say, the above equation (1) holds when the velocity of the filling CNG in the portion of the passage running from the filler port 12 to the fuel tank 2 via the inlet pipe 13 in which the cross sectional area of the passage is smallest (this portion will be hereinafter referred to as the "smallest diameter portion") is equal to or higher than the acoustic velocity.

The velocity of the filling CNG becomes equal to or higher than the acoustic velocity when the following condition is met; that is, the velocity of the filling CNG becomes equal to or higher than the acoustic velocity when the ratio (Ptank/Pdis) of the pressure Ptank in the fuel tank 2 immediately before filling with the filling CNG (or at the time when the filler port 12 is opened) and the injection pressure Pdis of the filling CNG dispensed through the filling nozzle is smaller than a threshold Pthre (Ptank/Pdis < Pthre).

Therefore, the above equation (1) holds when the pressure Ptank in the fuel tank 2 immediately before filling with the filling CNG is lower than the product of the injection pressure Pdis of the filling nozzle and the threshold Pthre (Ptank < Pthre*Pdis).

The aforementioned threshold Pthre varies with the injection pressure of the filling nozzle and the cross sectional area of the passage in the smallest diameter portion. The injection pressure Pdis of the filling nozzle can be known beforehand using a statistical method. In this case, as the injection pressure Pdis, a value equal to the lowest injection pressure Pdismin among injection pressures Pdis obtained using a statistical method minus a margin may be employed. The cross sectional area of the passage in the smallest diameter portion can be determined in advance. Therefore, the product of the injection pressure Pdis and the threshold Pthre can be obtained in advance as a fixed value. (In the following, the above-mentioned product will be referred to as the "critical pressure Pcri".)

The ECU 14 calculates the gas constant R of the filling CNG according to equation (1) presented above when the pressure ptank in the fuel tank 2 immediately before filling with the filling CNG is lower than the above-mentioned critical pressure Pcri. It is difficult to measure the acoustic velocity a of the filling CNG using an existing vehicle-mounted device. Therefore, the ECU 14 calculates the acoustic velocity a of the filling CNG by the following method.

The velocity (acoustic velocity) a of the filling CNG can be expressed by the following equation (2):

$$a = Q/A \quad (2),$$

where Q is the quantity of the filling CNG supplied per unit time (i.e. flow rate), and A is the cross sectional area of the passage in the smallest diameter portion.

The flow rate Q of the filling CNG is proportional to the rise $\Delta$ptank in the pressure in the fuel tank 2 per a specific time $\Delta$t. Hence the flow rate Q of the filling CNG can be expressed by the following equation (3):

$$Q = k*(\Delta Ptank/\Delta t) \quad (3),$$

where k is a coefficient, which is determined based on the volume of the fuel tank 2 and other factors.

From the above equations (2) and (3), the acoustic velocity $\underline{a}$ of the filling CNG can be expressed by the following equation (4):

$$a = \{k*(\Delta ptank/\Delta t)\}/A \quad (4).$$

From the above equations (1) and (4), the gas constant R can be expressed by the following equation (5):

$$R = [\{k*(\Delta ptank/\Delta t)\}/A]^2/(\gamma*T) \quad (5).$$

The ECU 14 can calculate the gas constant R of the filing CNG from the above equation (5) when the value Ptank measured by the pressure sensor 10 (i.e. the pressure in the fuel tank 2) immediately before filling with the filling CNG is lower than the aforementioned critical pressure Pcri.

As the specific heat ratio in the above equation (5), an adapted value determined based on the specific heat ratio of carbon dioxide ($CO_2$) (1.29), the specific heat ratio of nitrogen ($N_2$) (1.40), and the specific heat ratio of methane (1.31), which is the main component of the CNG, is used. For instance, the adapted value may be approximately 1.3. As the temperature T in the above equation (5), a value measured by the intake air temperature sensor 8 (i.e. the outside air temperature) is used. In the case where the temperature sensor is attached to a passage running from the filler port 12 to the fuel tank 2, a value measured by this temperature sensor may be used as the aforementioned temperature T.

As the gas constant R of the filling CNG is calculated by the above-described method, the gas constant R of the filling CNG can be determined immediately after filling with the filling CNG is finished. In consequence, it is also possible to determine the concentration of the inert gases contained in the filling CNG using the gas constant R of the filling gas CNG as a parameter. The relationship between the gas constant R and the concentration of the inert gases ought to be determined in advance by experiments. The relationship between the gas constant R and the concentration of the inert gases may be stored in the form of a map in the ROM of the ECU 14. Alternatively, it may be stored in the form of a function formula in the ROM of the ECU 14.

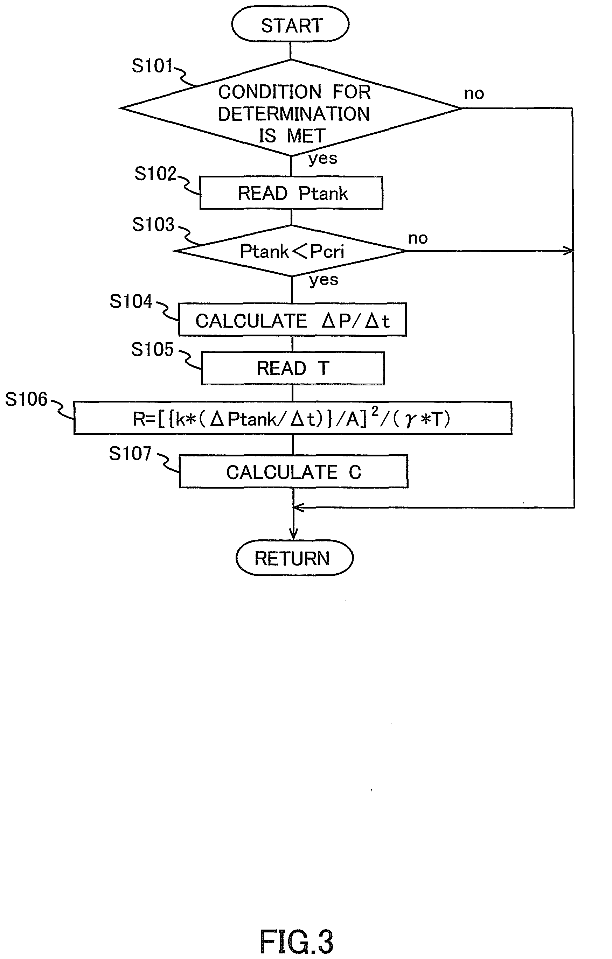

A process of determining the concentration of the inert gases in the filling CNG will be described with reference to Fig. 3. Fig. 3 is a flow chart of a processing routine executed by the ECU 14 to determine the inert gas concentration in the filling CNG.

In the processing routine shown in Fig. 3, the ECU 14 firstly determines, in step S101, whether or not a condition for determination of the inert gas concentration is met. The condition for determination mentioned above is a condition that is met, for example, when the internal combustion engine 1 is not running and a fuel lid covering the filler opening 12 is open. If the determination made in step S101 is negative, the ECU 14 once terminates the execution of this routine. On the other hand, the determination made in step S101 is affirmative, the ECU 14 proceeds to step S102.

In step S102, the ECU 14 reads a measurement value Ptank of the pressure sensor 10. The measurement value Ptank at this time represents the pressure in the fuel tank 2 immediately before filling with the filling CNG.

In step S103, the ECU 14 determines whether or not the measurement value Ptank read in step S102 is smaller than the aforementioned critical pressure Pcri. If the determination made in step 103 is negative, the ECU 14 once terminates the execution of this routine. On the other hand, if the determination made in step S103 is affirmative, the ECU 14 proceeds to step S104.

In step S104, the ECU 14 calculates the rise in the pressure in the fuel tank 2 per a specific time $\Delta$t. For example, the ECU 14 reads a measurement value Ptank' of the pressure sensor 10 at the time when the specific time $\Delta$t has elapsed since the time at which the measurement value Ptank of the pressure sensor 10 was read in step S102 and divides the difference $\Delta$Ptank between these values (= Ptank' - Ptank) by the specific time $\Delta$t.

In step S105, the ECU 14 reads a measurement value (outside air temperature) T of the intake air temperature sensor 8. The outside air temperature thus read represents the temperature of the filling CNG.

In step S106, the ECU 14 substitutes the value calculated in the above step S104 (= Δptank/Δt) and the temperature T measured in the above step S105 into the aforementioned equation (5) to calculate the gas constant R of the filing CNG.

In step S107, the ECU 14 calculates the inert gas concentration C in the filling CNG using the gas constant R calculated in the above step S106 as a parameter.

As described above, the calculation unit according to the present invention is implemented by the execution of the processing routine shown in Fig. 3 by the ECU 14. In consequence, it is possible to determine the inert gas concentration in the filling CNG promptly when filling with the filling CNG is finished.

Then, the ECU 14 calculates the inert gas concentration in the mixed CNG using the inert gas concentration in the filling CNG. Specifically, the ECU 14 calculates the inert gas concentration Call of the mixed CNG according to the following equation (6):

$$Call = \{C1*P1 + C2*(P2 - P1)\}/P2 \quad (6),$$

where C1 is the inert gas concentration in the remaining CNG, P1 is the pressure in the fuel tank 2 immediately before filling with the filling CNG, C2 is the inert gas concentration in the filling CNG, and P2 is the pressure in the fuel tank 2 at the time when filling with the filling CNG is finished.

The pressure in the fuel tank 2 correlates with the quantity of CNG stored in the fuel tank 2. Therefore, the value of P1 in the above equation (6) represents the quantity of remaining CNG, and the difference between P2 and P1 (= P2 - P1) represents the quantity of the filling CNG.

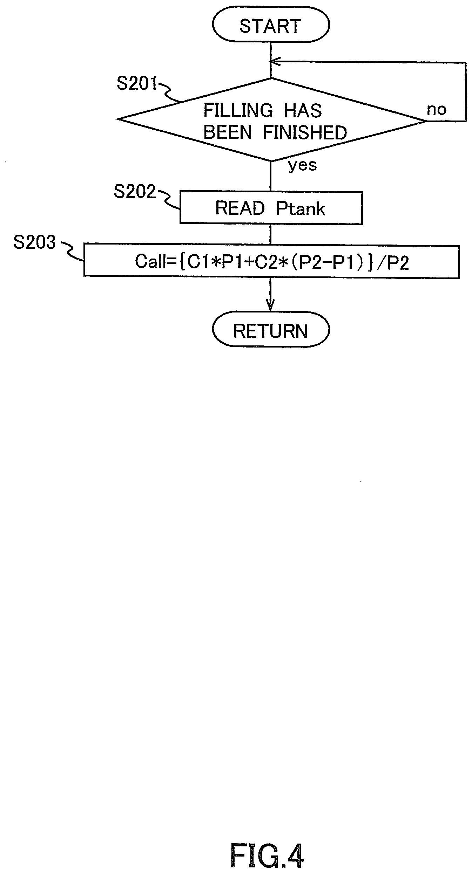

Now, a process of determining the inert gas concentration in the mixed CNG will be described with reference to Fig. 4. Fig. 4 is a flow chart of a processing routine executed by the ECU 14 to determine the inert gas concentration in the mixed CNG.

In the processing routine shown in Fig. 4, the ECU 14 firstly determines, in step S201, whether or not filling with the filling CNG has been finished. For example, the ECU 14 may determine that filling with the filling CNG has been finished when the increase in the measurement value of the pressure sensor 10 per unit time becomes lower than a predetermined a lower limit value. Alternatively, the ECU 14 may determine that filling with the filling CNG has been finished on condition that the filler port 12 is closed or the fuel lid is closed. The "lower limit value" mentioned above is equal to a maximum rise in the pressure in the fuel tank 2 during the period in which filling with the filling CNG is not performed plus a margin.

If the determination made in the above step S201 is negative, the ECU 14 executes the processing of step S201 repeatedly. On the other hand, if the determination made in the above step S201 is affirmative, the ECU 14 proceeds to step S202. In step S202, the ECU 14 reads a measurement value Ptank of the pressure sensor 10. The measurement value Ptank read in step S202 represents the pressure P2 in the fuel tank 2 at the time at which filling with the filling CNG is finished.

In step S203, the ECU 14 calculates the inert gas concentration Call in the mixed CNG by substituting the inert gas concentration C1 in the remaining CNG, the pressure P1 in the fuel tank 2 immediately before filling with the filling CNG, the inert gas concentration C2 in the filling CNG, and the pressure P2 in the fuel tank 2 at the time when filling with the filling CNG is finished into equation (6) presented above. In this process, the ECU 14 uses the measurement value Ptank read in step S102 in the processing routine shown in Fig. 3 as the pressure P1 in the fuel tank 2 immediately before filling with the filling CNG. The ECU 14 also uses the inert gas concentration C calculated in step S107 in the processing routine shown in Fig. 3 as the inert gas concentration C2 of the filling CNG. Furthermore, the ECU 14 uses the measurement value Ptank read in the above step S202 as the pressure P2 in the fuel tank 2 at the time of finish of filling with the filling CNG.

As described above, the inert gas concentration Call in the mixed CNG can be determined at the time when filling with the filling CNG is finished by executing the processing routine shown in Fig. 4 by the ECU 14. In consequence, when the internal combustion engine 1 is started for the first time after filling with the filling CNG, the ECU 14 can calculate a fuel injection quantity and an intake air quantity appropriate to the inert gas concentration Call of the mixed CNG.

For example, the ECU 14 determines the theoretical air-fuel ratio of the mixed CNG on the basis of the inert gas concentration Call of the mixed CNG and the aforementioned relationship shown in Fig. 2. Then, the ECU 14 determines the fuel injection quantity on the basis of the theoretical air-fuel ratio of the mixed CNG. In the above process, the ECU 14 may calculate the target air-fuel ratio of the mixed CNG by multiplying the ratio of the target air-fuel ratio to the theoretical air-fuel ratio of the remaining CNG and the theoretical air-fuel ratio of the mixed CNG together. Furthermore, the ECU 14 may calculate a fuel injection quantity by dividing the intake air quantity of the internal combustion engine by the target air-fuel ratio of the mixed CNG.

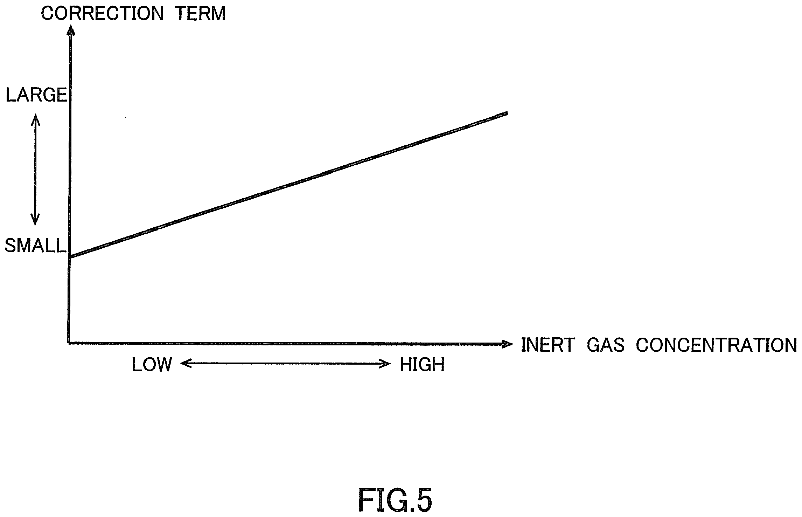

In determining a fuel injection quantity after filling with the filling CNG, the ECU 14 may employ a method using an additional correction term added to the equation for calculating the fuel injection quantity. The correction term in this method is determined on the basis of the inert gas concentration Call in the mixed CNG. For example, as shown in Fig. 5, the correction term is set larger when the inert gas concentration Call is high than when it is low. In other words, the correction term is set in such a way that the fuel injection quantity is larger when the inert gas concentration is high than when it is low.

Instead of correcting the fuel injection quantity on the basis of the inert gas concentration in the filling CNG, the ECU 14 may be adapted to correct the intake air quantity of the internal combustion engine 1 (i.e. the degree of opening of the intake throttle valve 7). In this case, the correction value may be set in such a way that the degree of opening of the intake throttle valve 7 is made smaller when the inert gas concentration is high than when it is low.

The control unit according to the present invention is implemented by the ECU 14 in controlling the fuel injection valve 4 and/or the intake throttle valve 7 in accordance with the fuel injection quantity and/or the intake air quantity calculated by the various methods described above.

According to the embodiment described in the foregoing, properties (the inert gas concentration) and the theoretical air-fuel ratio of the mixed CNG can be determined promptly after filling with the filling CNG is finished. Therefore, the actual air-fuel ratio can be made equal or close to the target air-fuel ratio on the occasion that the internal combustion engine 1 is started for the first time after filling with the filling CNG. In other words, on the occasion that the internal combustion engine 1 is started for the first time after filling with the filling CNG, air-fuel mixture appropriate to properties of the mixed CNG can be formed. Consequently, when the internal combustion engine 1 is started for the first time after filling with the filling CNG, an unwanted increase in the fuel consumption, an increase in exhaust emissions, and a deterioration in stability of combustion can be prevented from occurring.

## DESCRIPTION OF THE REFERENCE SIGNS

1: internal combustion engine
2: fuel tank
3: cylinder
4: fuel injection valve
5: intake passage
6: exhaust passage
7: intake throttle valve
8: intake temperature sensor
9: A/F sensor
10: pressure sensor
11: fuel supply pipe
12: filler port
13: inlet pipe
14: ECU
100: vehicle

## Claims

1. A fuel property determination system for a vehicle (100) equipped with an internal combustion engine (1) using compressed natural gas containing $CO_2$ and $N_2$, comprising:

    a fuel tank (2) for storing compressed natural gas;
    a filler port (12), which is opened when the compressed natural gas is supplied to the fuel tank;
    a pressure sensor (10) for measuring the pressure in the fuel tank (2); and
    a calculation unit for calculating, when new compressed natural gas is supplied to the fuel tank (2), the gas constant of the compressed natural gas newly supplied to the fuel tank using a change in the pressure measured by the pressure sensor (10) and a cross sectional area of a fuel passage (13) running from the filler port to the fuel tank as parameters and calculating the concentration of $CO_2$ and $N_2$ contained in the compressed natural gas newly supplied to the fuel tank (2) using the gas constant as a parameter.

2. A fuel property determination system for a vehicle according to claim 1, wherein the calculation unit (14) is configured so as to calculate the concentration of the $CO_2$ and $N_2$ contained in mixed fuel as a mixture of the compressed natural gas remaining in the fuel tank (2) and the compressed natural gas newly supplied to the fuel tank using as parameters the quantity of compressed natural gas remaining in the fuel tank at the time when the new compressed natural gas is supplied to the fuel tank, the $CO_2$ and $N_2$ concentration in the compressed natural gas remaining in the fuel tank, the quantity of the compressed natural gas newly supplied to the fuel tank, and the $CO_2$ and $N_2$ concentration in the compressed natural gas newly supplied to the fuel tank.

3. A fuel property determination system for a vehicle according to claim 2, wherein the calculation unit is configured so as to calculate the theoretical air-fuel ratio of the compressed natural gas as the mixture of the compressed natural gas remaining in the fuel tank (2) and the newly supplied compressed natural gas on the basis of a relationship between the $CO_2$ and $N_2$ concentration in compressed natural gas and the theoretical air fuel ratio wherein the theoretical air-fuel ratio is lower when the $CO_2$ and $N_2$ concentration is high than when the $CO_2$ and $N_2$ concentration is low.

4. A fuel property determination system for a vehicle according to claim 3, further comprising a control unit for controlling at least one of a fuel injection quantity and an intake air quantity of the internal combustion engine (1) on the basis of the theoretical air-fuel ratio calculated by the calculation unit.

5. A fuel property determination system for a vehicle according to claim 2, further comprising a control unit for correcting a fuel injection quantity on the basis of a relationship between the $CO_2$ and $N_2$ concentration in compressed natural gas and the theoretical air-fuel ratio wherein the theoretical air-fuel ratio is lower when the $CO_2$ and $N_2$ concentration is high than when the $CO_2$ and $N_2$ concentration is low.

6. A fuel property determination system for a vehicle according to claim 5, wherein the control unit is configured so as to correct the fuel injection quantity in such a way that the fuel injection quantity is larger when the $CO_2$ and $N_2$ concentration in the mixed fuel is high than when the $CO_2$ and $N_2$ concentration in the mixed fuel is low.

**Patentansprüche**

1. Kraftstoffeigenschaftsbestimmungssystem für ein Fahrzeug (100), das mit einem Verbrennungsmotor (1) ausgestattet ist, der komprimiertes Erdgas verwendet, das $CO_2$ und $N_2$ enthält, umfassend:

einen Kraftstofftank (2) zum Aufnehmen von komprimiertem Erdgas,
einen Einfüllstutzen (12), der geöffnet wird, wenn das komprimierte Erdgas dem Kraftstofftank zugeführt wird,
einen Drucksensor (10) zum Messen des Drucks in dem Kraftstofftank (2), und
eine Recheneinheit zum Berechnen, wenn neues komprimiertes Erdgas dem Kraftstofftank (2) zugeführt wird, der Gaskonstante des dem Kraftstofftank neu zugeführten komprimierten Erdgases durch Verwendung einer Änderung des Drucks, die durch den Drucksensor (10) gemessen wird, und einer Querschnittsfläche eines Kraftstoffkanals (13), der von dem Einfüllstutzen zu dem Kraftstofftank verläuft, als Parameter und zum Be-rechnen der Konzentration von $CO_2$ und $N_2$, die in dem komprimierten Erdgas, das dem Kraftstofftank (2) neu zugeführt wird, enthalten sind, durch Verwendung der Gaskonstante als Parameter.

2. Kraftstoffeigenschaftsbestimmungssystem für ein Fahrzeug nach Anspruch 1, wobei die Recheneinheit (14) dazu ausgebildet ist, die Konzentration des $CO_2$ und $N_2$, die in gemischtem Kraftstoff als Gemisch des in dem Kraftstofftank (2) zurückgebliebenen komprimierten Erdgases und des dem Kraftstofftank neu zugeführten komprimierten Erdgases enthalten sind, durch Verwendung der zu dem Zeitpunkt, wenn das neue komprimierte Erdgas dem Kraftstofftank zugeführt wird, in dem Kraftstofftank zurückgebliebenen Menge an komprimiertem Erdgas, der $CO_2$- und $N_2$-Kon-zentration im in dem Kraftstofftank zurückgebliebenen komprimierten Erdgas, der Menge des dem Kraftstofftank neu zugeführten komprimierten Erdgases und der $CO_2$- und $N_2$-Konzentration in dem dem Kraftstofftank neu zugeführten komprimierten Erdgas als Parameter zu berechnen.

3. Kraftstoffeigenschaftsbestimmungssystem für ein Fahrzeug nach Anspruch 2, wobei die Recheneinheit dazu ausgebildet ist, das theoretische Luft-Kraftstoff-Verhältnis des komprimierten Erdgases als Gemisch aus dem in dem Kraftstofftank (2) zurückgebliebenen komprimierten Erdgas und dem neu zugeführten komprimierten Erdgas auf der Basis einer Beziehung zwischen der $CO_2$- und $N_2$-Konzentration in komprimiertem Erdgas und dem theoretischen Luft-Kraftstoff-Verhältnis zu berechnen, wobei, wenn die $CO_2$- und $N_2$-Konzentration hoch ist, das theoretische Luft-Kraftstoff-Verhältnis kleiner ist, als wenn die $CO_2$- und $N_2$-Konzentration niedrig ist.

**4.** Kraftstoffeigenschaftsbestimmungssystem für ein Fahrzeug nach Anspruch 3, ferner umfassend eine Steuerungseinheit zum Steuern von mindestens einer aus der Gruppe umfassend eine Kraftstoffeinspritzmenge und eine Einlassluftmenge des Verbrennungsmotors (1) auf der Basis des theoretischen Luft-Kraftstoff-Verhältnisses, das durch die Recheneinheit berechnet wird.

**5.** Kraftstoffeigenschaftsbestimmungssystem für ein Fahrzeug nach Anspruch 2, ferner umfassend eine Steuerungseinheit zum Korrigieren einer Kraftstoffeinspritzmenge auf der Basis einer Beziehung zwischen der $CO_2$- und $N_2$-Konzentration in komprimiertem Erdgas und dem theoretischen Luft-Kraftstoff-Verhältnis, wobei, wenn die $CO_2$- und $N_2$-Konzentration hoch ist, das theoretische Luft-Kraftstoff-Verhältnis kleiner ist, als wenn die $CO_2$- und $N_2$-Konzentration niedrig ist.

**6.** Kraftstoffeigenschaftsbestimmungssystem für ein Fahrzeug nach Anspruch 5, wobei die Steuerungseinheit dazu ausgebildet ist, die Kraftstoffeinspritzmenge auf eine Weise zu korrigieren, dass, wenn die $CO_2$- und $N_2$-Konzentration in dem gemischten Kraftstoff hoch ist, die Kraftstoffeinspritzmenge größer ist, als wenn die $CO_2$- und $N_2$-Konzentration in dem gemischten Kraftstoff niedrig ist.


**Revendications**

**1.** Système de détermination de propriété d'un carburant pour un véhicule (100) équipé d'un moteur à combustion interne (1) utilisant du gaz naturel comprimé contenant du $CO_2$ et $N_2$, comprenant :

un réservoir à carburant (2) pour stocker du gaz naturel comprimé ;
un orifice de remplissage (12), qui est ouvert quand le gaz naturel comprimé est injecté dans le réservoir à carburant ;
un capteur de pression (10) pour mesurer la pression dans le réservoir à carburant (2) ; et
une unité de calcul pour calculer, quand du nouveau gaz naturel comprimé est injecté dans le réservoir à carburant (2), la constante de gaz du gaz naturel comprimé nouvellement injecté dans le réservoir à carburant en utilisant une variation de la pression mesurée par le capteur de pression (10) et une section transversale d'un passage à carburant (13) allant de l'orifice de remplissage jusqu'au réservoir à carburant comme paramètres et pour calculer la concentration de $CO_2$ et $N_2$ contenus dans le gaz naturel comprimé nouvellement injecté dans le réservoir à carburant (2) en utilisant la constante de gaz comme paramètre.

**2.** Système de détermination de propriété d'un carburant pour un véhicule selon la revendication 1, dans lequel l'unité de calcul (14) est configurée pour calculer la concentration de $CO_2$ et $N_2$ contenus dans le carburant en mélange constitué par le mélange du gaz naturel comprimé subsistant dans le réservoir à carburant (2) et du gaz naturel comprimé nouvellement injecté dans le réservoir à carburant en utilisant comme paramètres la quantité de gaz naturel comprimé subsistant dans le réservoir à carburant au moment où le nouveau volume de gaz naturel comprimé est injecté dans le réservoir à carburant, la concentration de $CO_2$ et $N_2$ dans le gaz naturel comprimé subsistant dans le réservoir à carburant, la quantité de gaz naturel comprimé nouvellement injecté dans le réservoir à carburant, et la concentration de $CO_2$ et $N_2$ dans le gaz naturel comprimé nouvellement injecté dans le réservoir à carburant.

**3.** Système de détermination de propriété d'un carburant pour un véhicule selon la revendication 2, dans lequel l'unité de calcul est configurée pour calculer le ratio air-carburant théorique du gaz naturel comprimé sous forme de mélange du gaz naturel comprimé subsistant dans le réservoir à carburant (2) et du gaz naturel comprimé nouvellement injecté sur la base de la relation entre la concentration de $CO_2$ et $N_2$ dans le gaz naturel comprimé et le ratio air-carburant théorique, dans lequel le ratio air-carburant théorique est plus bas quand la concentration de $CO_2$ et $N_2$ est élevée que quand la concentration de $CO_2$ et $N_2$ est basse.

**4.** Système de détermination de propriété d'un carburant pour un véhicule selon la revendication 3, comprenant en outre une unité de régulation qui régule au moins l'une de la quantité de carburant injectée et de la quantité de prise d'air du moteur à combustion interne (1) en fonction du ratio air-carburant théorique calculé par l'unité de calcul.

**5.** Système de détermination de propriété d'un carburant pour un véhicule selon la revendication 2, comprenant en outre une unité de régulation pour corriger la quantité de carburant injectée sur la base d'une relation entre la concentration de $CO_2$ et $N_2$ dans le gaz naturel comprimé et le ratio air-carburant théorique, dans lequel le ratio air-carburant théorique est plus bas quand la concentration de $CO_2$ et $N_2$ est élevée que quand la concentration de $CO_2$ et $N_2$ est basse.

**6.** Système de détermination de propriété d'un carburant pour un véhicule selon la revendication 5, dans lequel l'unité de régulation est configurée pour corriger la quantité de carburant injectée de façon que la quantité de carburant injectée soit plus importante quand la concentration de $CO_2$ et $N_2$ dans le carburant en mélange est élevée que quand la concentration de $CO_2$ et $N_2$ dans le carburant en mélange est basse.

FIG.1

THEORETICAL AIR FUEL RATIO

FIG.2

EP 2 772 627 B1

START

S101 ⟶ CONDITION FOR
DETERMINATION
IS MET — no

yes

S102 ⟶ READ Ptank

S103 ⟶ Ptank < Pcri — no

yes

S104 ⟶ CALCULATE $\Delta P / \Delta t$

S105 ⟶ READ T

S106 ⟶ $R = [\{k * (\Delta P tank / \Delta t)\} / A]^2 / (\gamma * T)$

S107 ⟶ CALCULATE C

RETURN

## FIG.3

START

S201 —

FILLING HAS
BEEN FINISHED ————— no

yes

S202 —

READ Ptank

S203 —

$Call = \{C1*P1 + C2*(P2 - P1)\} / P2$

RETURN

# FIG.4

FIG.5

EP 2 772 627 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008049890 A1

- JP 10148143 A